# EUROPÄISCHE PATENTSCHRIFT

(11) **EP 0 844 729 B1**
(45) Veröffentlichungstag und Bekanntmachung des Hinweises auf die Patenterteilung: **26.02.2003**
(21) Anmeldenummer: 97810837.1
(22) Anmeldetag: 07.11.1997
(51) Int. Cl.: H02M 7/48

(54) **Verfahren und Vorrichtung zur Ausregelung des DC-Offsets eines Umrichters**
Method and device for suppressing the DC-offset of an inverter
Procédure et dispositif pour supprimer le décalage de tension continu

(30) Priorität: 25.11.1996 DE 19648696
(43) Veröffentlichungstag der Anmeldung: 27.05.1998
(73) Patentinhaber: ABB Schweiz AG, 5400 Baden (CH)
(72) Erfinder: Dähler, Peter, 5236 Remigen (CH); Gaupp, Osvin, 5400 Baden (CH)
(74) Vertreter: ABB Patent Attorneys

(56) Entgegenhaltungen:
- EP-A- 0 427 527
- PATENT ABSTRACTS OF JAPAN vol. 1997, no. 01, 31. Januar 1997 (1997-01-31) & JP 08 228485 A (FUJI ELECTRIC CO LTD), 3. September 1996 (1996-09-03)
- PATENT ABSTRACTS OF JAPAN vol. 1997, no. 01, 31. Januar 1997 (1997-01-31) & JP 08 233869 A (TOSHIBA CORP), 13. September 1996 (1996-09-13)
- PATENT ABSTRACTS OF JAPAN vol. 1995, no. 04, 31. Mai 1995 (1995-05-31) & JP 07 015972 A (OKUMA MACH WORKS LTD), 17. Januar 1995 (1995-01-17)

## Beschreibung

### Technisches Gebiet

Die Erfindung bezieht sich auf das Gebiet der Leistungselektronik. Sie geht aus von einem Verfahren bzw. einer Vorrichtung zur Ausregelung des DC-Offsets eines Umrichters gemäss dem Oberbegriff des ersten Anspruchs.

### Stand der Technik

Bei U-Umrichtern, d.h.- Umrichtern mit einem Gleichspannungszwischenkreis, die wechselspannungsseitig einen Leistungstransformator speisen ergeben sich Probleme mit einer der Wechselspannung anhaftenden Gleichspannungskomponente (DC-Offset). Dieser DC-Offset, obwohl er verglichen mit der Amplitude der Wechselspannung (z.B. 7.5 kV) sehr gering ist (z.B. einige Volts oder Bruchteile davon), kann den Transformator zur Sättigung bringen. Dies vermindert die zu übertragende Leistung erheblich oder kann den Betrieb sogar verunmöglichen.

Zur Verminderung dieser Einflüsse wurden bis jetzt folgende Lösungen vorgeschlagen:

Einerseits werden konstruktive Massnahmen am Transformator vorgenommen. Insbesondere wird ein Luftspalt vorgesehen, oder es werden Induktions-Messonden (z.B. Hall-Sonden) in den Transformator eingeführt und der DC-Offset möglichst gut ausgeregelt. Diese Massnahmen sind jedoch vergleichsweise aufwendig und teuer und vermögen den DC-Offset auch nur auf ein gewisses Minimum zu regeln. Die konstruktiven Eingriffe am Transformator haben grössere Verluste und Geräuschemissionen zur Folge. Insbesondere bei Transformatoren hoher Leistung sind diese Nachteile nicht mehr hinnehmbar.

Aus der JP 08233869 ist eine Vorrichtung zur Ausregelung eines DC-Offsets im Ausgangsstrom eines Umrichters bekannt. Desweiteren ist in der JP 08228485 eine Vorrichtung zur Ausregelung des DC-Offsets eines Umrichters mit einem Gleichspannungszwischenkreis angegeben, wobei die Leistungshalbleiterschalter des Umrichters nach Massgabe von Schaltbefehlen einer Ansteuerschaltung einund ausgeschaltet werden. Weiterhin ist ein Tiefpass vorgesehen, der eine wechselspannungsseitige Ausgangsspannung des Umrichters auf ein auf elektronischem Weg verarbeitbares Niveaus reduziert. Dem Tiefpass ist ein Regler, insbesondere ein P-Regler, ein I-Regler oder ein PI-Regler, nachgeschaltet, der mit der Ansteuerschaltung verbunden ist und durch Verzögerung oder Verschiebung der entsprechenden Schaltbefehle den DC-Offset im wesentlichen zu Null regelt.

Andererseits wurde versucht, den DC-Offset mittels hochpräzisen, und somit auch teuren DC-Stromwandlern zu erfassen und auszuregeln. Durch diese Massnahme erreichte man aber ebenfalls nur eine unbefriedigende Ausregelung und die Regelung war entsprechend kompliziert und aufwendig.

### Darstellung der Erfindung

Aufgabe der vorliegenden Erfindung ist es deshalb, eine Vorrichtung bzw. ein Verfahren zur Ausregelung des DC-Offsets eines Umrichters anzugeben, die oder das möglichst einfach aufzubauen, robust im Betrieb ist und gegenüber dem Stand der Technik eine verbesserte Ausregelung des DC-Offsets ermöglicht.

Diese Aufgabe wird bei einer Vorrichtung der eingangs genannten Art durch die Merkmale des ersten Anspruchs gelöst.

Kern der Erfindung ist es also, dass die wechselspannungseitige Ausgangsspannung des Umrichters einem im wesentlichen passiven (d.h. offsetfreien) Tiefpassfilter zugeführt wird, das der Wechselanteil der Ausgangsspannung auf ein auf elektronischem Weg verarbeitbares Niveau reduziert. Dem Tiefpass ist ein Regler nachgeschaltet, der durch geringfügige Verzögerung oder Verschiebung der entsprechenden Schaltbefehle den DC-Offset im wesentlichen gegen Null regelt. Das Tiefpassfilter wird vorzugsweise als kombiniertes passives und aktives Filter ausgeführt. Die Verwendung eines passiven Filters hat insbesondere den Vorteil, dass kein zusätzlicher DC-Offset durch die Operationsverstärker hinzugefügt wird. Da sich die elektronische Mess- und Regelschaltung auf Starkstrompotential des Umrichters befindet, wird das Ausgangssignal des Reglers der Ansteuerschaltung der Schalter des Umrichter vorzugsweise auf in digitalisierter Form auf optischem Weg zugeführt. Der A/D-Wandler ist mit Vorteil dem Regler nachgeschaltet, so dass ein durch den A/D-Wandler hinzugefügter DC-Offset automatisch auch ausgeregelt wird. Die Reglerverstärkung beläuft sich z.B. im Bereich von 25-75 µs/V. Die Erfindung nutzt die Tatsache, dass heute sehr günstige Standard-Operationsverstärker mit hervorragenden Offseteigenschaften am Markt erhältlich sind.

Weitere Ausführungsbeispiele ergeben sich aus den entsprechenden abhängigen Ansprüchen.

Mit dem erfindungsgemässen Verfahren bzw. der erfindungsgemässen Vorrichtung erreicht man eine Umrichterausgangsspannung, die im Idealfall keinen für den Transformator störenden DC-Offset aufweist. Die erfindungsgemässe Lösung ist wesentlich billiger und genauer als die Lösungsansätze nach dem Stand der Technik.

### Kurze Beschreibung der Zeichnungen

Nachfolgend wird die Erfindung anhand von Ausführungsbeispielen im Zusammenhang mit den Zeichnungen näher erläutert.

Es zeigen:
- **Fig. 1**: Ein Prinzipschaltbild der erfindungsgemässen Vorrichtung;
- **Fig. 2**: Eine mögliche Schaltungsanordnung für das Tiefpassfilter und den Regler;
- **Fig. 3**: Eine Variante der Erfindung für 3-phasige Umrichter.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### Wege zur Ausführung der Erfindung

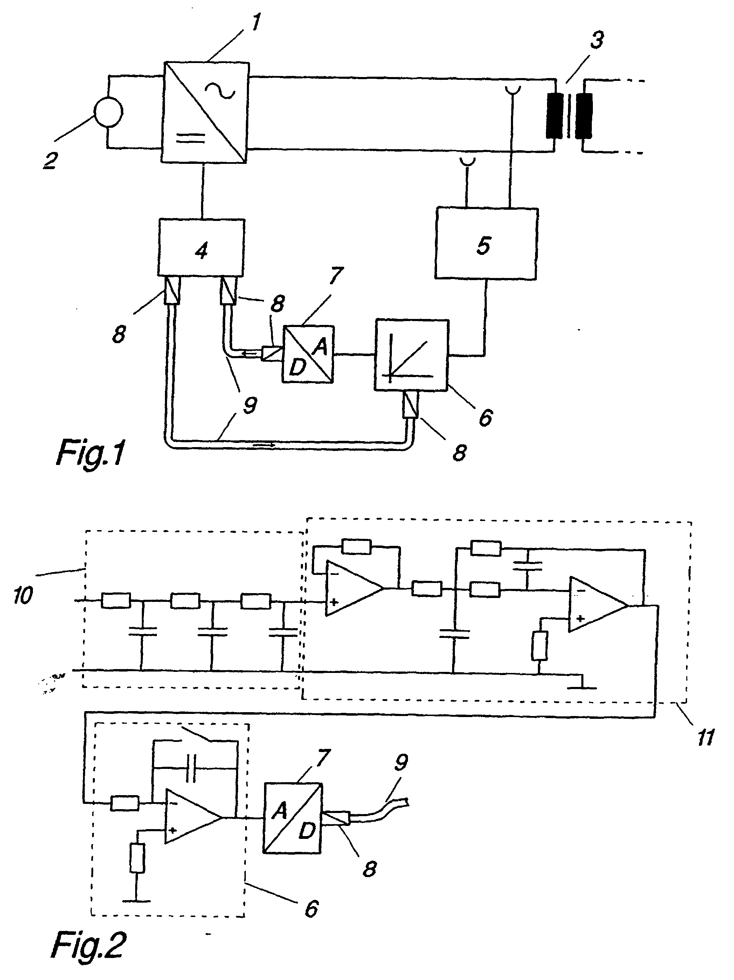

Figur 1 zeigt ein Blockschaltbild, anhand dessen das erfindungsgemässe Verfahren bzw. die erfindungsgemässe Vorrichtung erläutert werden soll. Mit 1 ist ein Umrichter bezeichnet, der an einen Gleichspannungszwischenkreis 2, dargestellt durch eine Gleichspannungsquelle, angeschlossen ist. Wechselspannungsseitig ist ein Transformator 3 vorgesehen. Der Transformator 3 ist seinerseits mit einer nicht dargestellten Last, z.B. einem Antriebsmotor oder einem Spannungsversorgungsnetz o.ä. verbunden. Die durch den Umrichter 1 erzeugte Wechselspannung weist einen unvermeidlichen Gleichspannungsanteil (DC-Offset) auf. Dieser Gleichspannungsanteil kann, wenn er zu gross wird, den Transformator 3 in die Sättigung bringen. Auch wenn der DC-Offset ungeregelt im Vergleich mit der vom Umrichter 1 erzeugten Wechselspannung sehr gering ist (z.B. 10 mV DC/ 7.5 kV AC), hat er auf den Transformator einen derart schädigenden Einfluss, dass die Funktionstüchtigkeit der gesamten Schaltungsanordnung in Frage gestellt wird. Eine möglichst wirksame Unterdrückung des DC-Offsets ist demzufolge unbedingt notwendig.

Nach der Erfindung wird diese Unterdrückung dadurch erreicht, dass die wechselspannungseitige Ausgangsspannung des Umrichters 1 zunächst einmal auf ein auf elektronischem Weg verarbeitbares Niveau gebracht wird. Dazu ist ein Tiefpass 5 vorgesehen, der die gemessene Ausgangsspannung oberhalb einer bestimmten Grenzfrequenz stark dämpft. Dem Tiefpass 5 ist ein Regler 6 nachgeschaltet, der die Ausgangsspannung des Tiefpasses 5 gegen Null regelt. Dies geschieht dadurch, dass der Regler 6 mit der Ansteuerschaltung 4 der Leistungshalbleiterschalter des Umrichters 1 verbunden ist. Durch Verzögerung der Einund Ausschaltbefehle nach Massgabe der am Regler 6 anliegenden Spannung wird der DC-Offset ausgeregelt. Wird z.B. ein positiver DC-Offset gemessen, so werden die Schalter zum Einschalten der positiven Halbwelle verzögert, bis über eine Periode gemessen schlussendlich kein DC-Offset mehr festzustellen ist. Bei negativem DC-Offset werden natürlich die Einschaltbefehle für die negative Halbwelle verzögert. Selbstverständlich können anstatt einer Verzögerung auch die jeweils anderen Schalter verfrüht eingeschaltet werden, während die bereits leitenden eher ausgeschaltet werden. Dasselbe gilt natürlich auch für eine pulsdauermodulierte Ansteuerung der Schalter. Die Regelverstärkung beläuft sich z.B. im Bereich von 25-75 µs/V, insbesondere ungefähr 50 µs/V. D.h. pro 1 Volt, die am Reglerausgang anliegen, wird eine Verzögerung von ca. 50 µs erzeugt.

Das Tiefpassfilter 5 umfasst gemäss **Figur 2** vorzugsweise einen passiven Teil 10 und einen aktiven Teil 11. Das passive Teilfilter 10 kann beispielsweise in Form einer dreistufigen Kaskade von RC-Gliedern aufgebaut sein. Es handelt sich dann um einen Tiefpass 3. Ordnung. Passive Filter haben den Vorteil, dass sich keinen eigenen DC-Offset hinzufügen. Für das aktive Teilfilter 11 wird deshalb mit Vorteil ein offsetarmer Operationsverstärker verwendet, der auch eine geringe Temperaturdrift aufweist. Solche Bausteine sind heute in low cost Ausführung in Standardausführung am Markt erhältlich.

Dasselbe gilt für den Regler 6, der als P-Regler, PI-Regler oder I-Regler ausgeführt sein kann. In Figur 2 ist ein I-Regler dargestellt. Der Regler 6 und das Tiefpassfilter 5 sowie der A/D-Wandler 7 sind zusammen mit der übrigen Messelektronik auf Hochspannungspotential angeordnet. Dadurch haben nachfolgend verursachte Offsetfehler keinen Einfluss mehr auf den Gleichspannungsanteil der wechselspannungsseitigen Ausgangsspannung des Umrichters 1. Insbesondere die Anordnung des A/D-Wandlers 7 nach dem Regler 6 ermöglicht, dass die Einflüsse des A/D-Wandlers automatisch mitausgeregelt werden. Der dem Regler 6 zugeordnete Schalter dient der Rücksetzung des Integrators, wenn der Umrichter nicht in Betrieb ist. Seine Ansteuerung erfolgt nach Massgabe der Ansteuerschaltung 4 über den zum Regler 6 hinführenden Lichtwellenleiter 9.

Die Signalverbindung zwischen der Ansteuerschaltung 4 und der Regelung bzw. dem A/D-Wandler 7 erfolgt vorzugsweise mittels Lichtwellenleitern 9. Die Messelektronik, d.h. das aktive Filter 11, der Regler 6, der A/D-Wandler 7 und die Optokoppler 8, kann entweder über einen Trenntransformator oder durch Auskopplung aus der Umrichterausgangsspannung mit der erforderlichen Leistung versorgt werden.

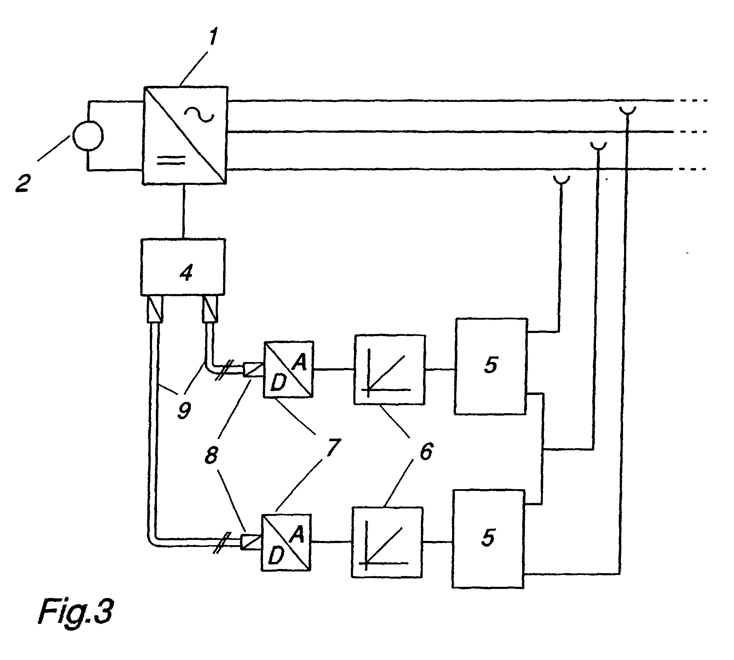

Figur 3 zeigt eine Variante der Erfindung für dreiphasige Umrichterschaltungsanordnungen. In diesem Fall sind zwei Sätze von Filtern 5, Reglern 6 und A/D-Wandlern 7 vorgesehen, die je zwischen zwei Phasen des wechselspannungsseitigen Ausgangs des Umrichters 1 geschaltet sind.

Mit der Erfindung kann der DC-Anteil auf einfache Weise so weit reduziert werden, dass der Transformator 3 keine störenden Sättigungserscheinungen mehr zeigt.

### Bezugszeichenliste

- 1: Umrichter
- 2: Gleichspannungszwischenkreis
- 3: Transformator
- 4: Ansteuerschaltung
- 5: Tiefpass
- 6: Regler
- 7: A/D-Wandler
- 8: Optokoppler
- 9: Lichtwellenleiter
- 10: passives Teilfilter
- 11: aktives Teilfilter

## Patentansprüche

1. Vorrichtung zur Ausregelung des DC-Offsets eines Umrichters (1) mit einem Gleichspannungszwischenkreis (2) und einem wechselspannungsseitigen Transformator (3), wobei die Leistungshalbleiterschalter des Umrichters (1) nach Massgabe von Schaltbefehlen einer Ansteuerschaltung (4) ein- und ausgeschaltet werden und ein Tiefpass (5) vorgesehen ist, der eine wechselspannungsseitige Ausgangsspannung des Umrichters (1) auf ein auf elektronischem Weg verarbeitbares Niveaus reduziert, welchem Tiefpass (5) ein Regler (6), insbesondere ein P-Regler, ein I-Regler oder ein PI-Regler, nachgeschaltet ist, der mit der Ansteuerschaltung (4) verbunden ist und durch Verzögerung oder Verschiebung der entsprechenden Schaltbefehle den DC-Offset im wesentlichen zu Null regelt, wobei
der Tiefpass (5) im wesentlichen passiv aufgebaut ist und einen ersten, passiven (10) und einen zweiten, aktiven Teil (11) umfasst.

2. Vorrichtung nach Anspruch 1, **dadurch gekennzeichnet, dass** dem Regler (6) ein A/D-Wandler (7) nachgeschaltet ist und der A/D-Wandler (7) über Optokoppler (8) und Lichtwellenleiter (9) mit der Ansteuerschaltung (4) verbunden ist.

3. Vorrichtung nach Anspruch 1 oder 2, **dadurch gekennzeichnet, dass** die Grenzfrequenz des Tiefpasses deutlich kleiner als die Frequenz der wechselspannungsseitigen Ausgangsspannung des Umrichters (1) ist.

4. Vorrichtung nach Anspruch 1, 2 oder 3, **dadurch gekennzeichnet, dass** ein Regelungsfaktor des Reglers (6) im Bereich von 25-75 µs/V liegt, und insbesondere 50 µs/V beträgt.

## Claims

1. Device for correcting the DC offset of a converter (1), having a DC intermediate circuit (2) and a transformer (3) on the AC voltage side, the power semiconductor switches of the converter (1) being switched on and off in accordance with switching commands of a driving circuit (4) and a low-pass filter (5) being provided which reduces an output voltage, on the AC voltage side, of the converter (1) to a level which can be processed electronically, downstream of which low-pass filter (5) there is connected a controller (6), in particular a P controller, an I controller or a PI controller, which is connected to the driving circuit (4) and controls the DC offset essentially to zero by delaying or shifting the corresponding switching commands, the low-pass filter (5) being of essentially passive design and comprising a first, passive part (10) and a second, active part (11).

2. Device according to Claim 1, **characterized in that** an A/D converter (7) is connected downstream of the controller (6), and the A/D converter (7) is connected to the driving circuit (4) via optocouplers (8) and optical fibers (9).

3. Device according to Claim 1 or 2, **characterized in that** the cut-off frequency of the low-pass filter is substantially lower than the frequency of the output voltage of the converter (1) on the AC voltage side.

4. Device according to Claim 1, 2 or 3, **characterized in that** a control factor of the controller (6) is in the range of 25-75 µs/V, and in particular is 50 µs/V.

## Revendications

1. Dispositif de régulation de l'offset CC d'un convertisseur (1) comprenant un circuit intermédiaire à tension continue (2) et un transformateur (3) côté tension alternative, les commutateurs à semiconducteur de puissance du convertisseur (1) étant activés et désactivés en fonction d'instructions de commutation d'un circuit de commande (4) et un filtre passe-bas (5) étant prévu, lequel réduit une tension de sortie du convertisseur (1) côté tension alternative à un niveau pouvant être traité de manière électronique, lequel filtre passe-bas (5) étant suivi d'un régulateur (6), plus précisément un régulateur P, un régulateur I ou un régulateur PI qui est relié au circuit de commande (4) et qui, par retard ou par décalage des instructions de commutation correspondantes, régule l'offset CC pratiquement à zéro, le filtre passe-bas (5) étant construit de manière essentiellement passive et comprenant une première partie passive (10) et une deuxième partie active (11).

2. Dispositif selon la revendication 1, **caractérisé en ce que** le régulateur (6) est suivi d'un convertisseur A/N (7) et le convertisseur A/N (7) est relié au circuit de commande (4) par le biais d'un optocoupleur (8) et d'une fibre optique (9).

3. Dispositif selon la revendication 1 ou 2, **caractérisé en ce que** la fréquence de coupure du filtre passe-bas est nettement inférieure à la fréquence de la tension de sortie du convertisseur (1) côté tension alternative.

4. Dispositif selon la revendication 1, 2 ou 3, **caractérisé en ce qu'**un facteur de régulation du régulateur (6) se trouve dans la plage de 25 à 75 µs/V et plus particulièrement au niveau de 50 µs/V.
